# EUROPEAN PATENT SPECIFICATION

(11) **EP 3 065 097 B1**
(45) Date of publication and mention of the grant of the patent: **08.05.2019**
(21) Application number: 15290059.3
(22) Date of filing: 05.03.2015
(51) Int. Cl.: G06Q 20/32, G06Q 30/06

(54) **DEVICE AND METHOD FOR FACILITATING A TRANSACTION**
VORRICHTUNG UND VERFAHREN ZUR ERMÖGLICHUNG EINER TRANSAKTION
DISPOSITIF ET PROCÉDÉ FACILITANT UNE TRANSACTION

(43) Date of publication of application: 07.09.2016
(73) Proprietor: NXP B.V., 5656 AG Eindhoven (NL)
(72) Inventor: Colnot, Vincent, 5656 AG Eindhoven (NL); Kerdreux, Xavier, 3001 Leuven (BE)
(74) Representative: Krott, Michel

(56) References cited:
- US-A1- 2013 111 219
- US-A1- 2014 019 367
- US-A1- 2015 007 335

## Description

### FIELD

The present disclosure relates to a device for facilitating a transaction. Furthermore, the present disclosure relates to a corresponding method for facilitating a transaction and to a corresponding computer program product.

### BACKGROUND

Today, security plays an important role in many electronic devices and computing environments. For example, conventional mobile electronic devices may be used for payment transactions which require that sensitive payment-related data, such as user credentials, are input and/or stored on said devices. Such mobile electronic devices may for instance be equipped with a near field communication (NFC) interface based on radio frequency (RF) technology, in order to exchange payment-related data with a terminal device at a point-of-sale (POS). Traditionally, sensitive payment-related data have been incorporated into dedicated security tokens such as smart cards, in which the data are inherently confined to a relatively trusted environment. With the advent of integrated solutions, in particular the integration of so-called secure elements (SEs) in consumer devices, payment-related data have increasingly been incorporated into such secure elements. Alternatively, so-called emulated cards embedded in consumer devices have often been used for accommodating payment-related data. As mentioned above, the card or the consumer device, as the case may be, exchanges the payment-related data with a terminal device at a POS.

US 2015/0007335 A1 discloses an apparatus, a method, and a computer readable medium for performing a secured multi-directional, multi-interface transaction processing. In an embodiment, an apparatus comprises a processor, a secure element coupled to the processor, and a connectivity device, which is coupled to the secure element, configured to exchange communications with a device that is external to the apparatus, and configured to receive and execute one or more unsolicited commands from the secure element.

US 2014/0019367 A1 discloses a method to send payment data through various air interfaces without compromising user data. The method first establishes a secure link over a first air interface by a purchasing device. This secure link is between the purchasing device and a point of sale device. The method further identifies a second air interface, which is different from the first air interface, and the second air interface is used to conduct a secure commercial transaction.

US 2013/0111219 A1 discloses methods and systems for delivering data from a secure execution environment to a display controller. A computing system has a display, a display controller with a decryption module, and a security element with security logic. The security logic can be configured to establish a secure path between the secure element and the display in response to a secure output mode request, wherein the secure path includes the display controller. In addition, the security logic may be configured to prevent the decryption module from being bypassed, and to transmit encrypted data from the secure element to the display via the secure path.

### SUMMARY

The present invention provides a device for facilitating a transaction according to the appended independent claim 1, and a method for facilitating a transaction using a device according to the appended independent claim 14.

In an exemplary embodiment, there is provided a device for facilitating a transaction, comprising at feast one host component, a communication controller and a secure element, said communication controller being a near field communication, NFC, controller and being communicatively coupled to the host component and to the secure element, wherein said communication controller is arranged to establish a communication with an external transaction device, and wherein said communication controller is further arranged to operate in a secure mode of operation in which the communication controller inhibits the host component from performing transactions with said transaction device and does not inhibit the secure element to perform transactions with said transaction device.

In illustrative embodiments, in the secure mode of operation, the communication controller is arranged to block select-application commands directed to the transaction device and originating from the host component, thereby inhibiting the host component from performing transactions with said transaction device.

In further illustrative embodiments, in the secure mode of operation, the communication controller is further arranged to determine whether the transaction device contains at least one payment application, to enter into a payment mode if the transaction device contains said payment application, and to block said select-application commands only if the communication controller is operating in the payment mode

In further illustrative embodiments, the communication controller is further arranged to enter into the secure mode of operation only if a point-of-sale application is active in the secure element.

In further illustrative embodiments, the communication controller is further arranged to operate in the secure mode of operation until the point-of-sale application is deactivated.

In further illustrative embodiments, the communication controller is further arranged to verify, in the secure mode of operation, whether the point-of-sale application has been selected by the host component before the secure element performs a transaction with the transaction device.

In further illustrative embodiments, the communication controller is further arranged to operate permanently in the secure mode of operation.

In further illustrative embodiments, the communication controller is a controller for controlling a wireless communication.

In further illustrative embodiments, the communication controller is a contact-interface controller.

In further illustrative embodiments, the device is a point-of-sale device.

In further illustrative embodiments, the device is a consumer device.

In further illustrative embodiments, the device is a personal computer, a mobile phone, a tablet, or a set-top box.

In a further exemplary embodiment, there is provided a method for facilitating a transaction using a device, said device comprising at least one host component, a communication controller and a secure element, said communication controller being a near field communication, NFC, controller and being communicatively coupled to the host component and to the secure element, the method comprising: said communication controller establishes a communication with an external transaction device, and said communication controller operates in a secure mode of operation in which the communication controller inhibits the host component from performing transactions with said transaction device and does not inhibit the secure element to perform transactions with said transaction device.

Furthermore, there is disclosed a computer program product comprising instructions which, when being executed by processing unit, cause said processing unit to carry out a method of the kind set forth.

### DESCRIPTION OF DRAWINGS

Embodiments will be described in more detail with reference to the appended drawings, in which:
Fig. 1 shows an example of a payment system;
Fig. 2 shows an illustrative embodiment of a consumer device;
Fig. 3 shows a further illustrative embodiment of a consumer device;
Fig. 4 shows an example of a process which may implement the presently disclosed method;
Fig. 5 shows a further example of a process which may implement the presently disclosed method.

### DESCRIPTION OF EMBODIMENTS

As mentioned above, there is disclosed a device for facilitating a transaction. The device comprises a host component (for example a host processor), a communication controller and a secure element. The communication controller is communicatively coupled to the host component and to the secure element. The communication controller is arranged to establish communication with an external transaction device. Furthermore, the communication controller is arranged to operate in a secure mode of operation in which it inhibits the host component from performing transactions with said transaction device, and in which it allows the secure element to perform such transactions. The device for facilitating the transaction may be a consumer device, for example.

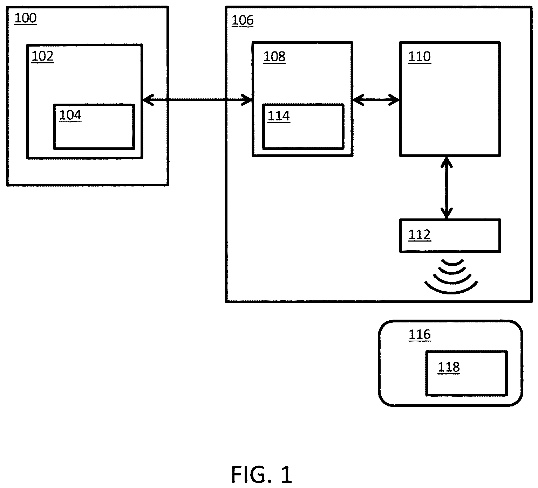

**Fig. 1** shows an example of a payment system. The payment system comprises a consumer device 100, an external point-of-sale device 106 and a payment card 116. The consumer device 100 may for example be a smartphone. The external point-of-sale device 106 may be a dedicated device which inherently provides a relatively secure environment. The payment card 116 may be a smart card or another consumer device, which comprises a secure element or an emulated card. Furthermore, the payment card 116 may contain at least one card payment application 118 with embedded payment-related data. The consumer device 100 comprises a host processor 102 which may be arranged to execute a payment terminal application 104. The external point-of-sale device 106 may include a secure controller 108 which is communicatively coupled to an NFC controller 110. Furthermore, the external point-of-sale device 106 may include an antenna 112 which may be controlled by the NFC controller 110, and which is used to establish communication with the payment card 116. The external point-of-sale device 106 may be a dedicated device which may be regarded as a relatively secure device, i.e. a device which is not likely to seek unauthorized access to payment-related data in the card 116. A relatively new trend is, however, that general-purpose consumer devices - such as personal computers, phones, tablets etc. - are used as terminal devices at a POS. In that case, since a general-purpose consumer device may easily get infected with malware, for example, the security of the payment-related data may be at risk. Thus, in general, it may be desirable to prevent that payment-related data contained in the card 116 are exposed to general-purpose processing units or functions.

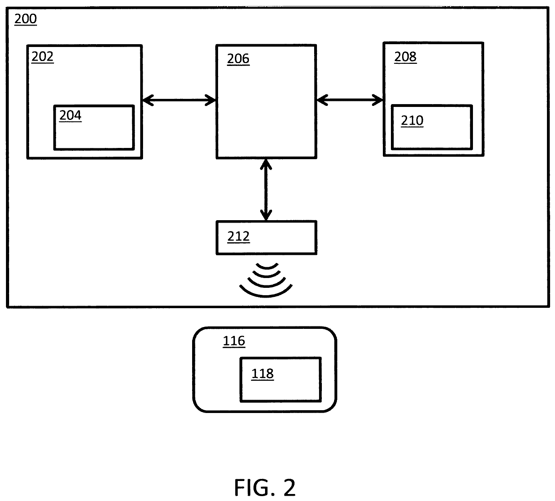

**Fig. 2** shows an illustrative embodiment of a consumer device 200. The consumer device 200 comprises a host component, specifically a host processor 202, which is communicatively coupled to a communication controller, specifically an NFC controller 206. Furthermore, the consumer device 200 comprises a secure element 208 which is communicatively coupled to the NFC controller 206. The host processor 202 may be arranged to execute a payment terminal application. The secure element may be arranged to execute a point-of-sale (POS) application 210. Furthermore, the consumer device 200 comprises an antenna 212 which may be controlled by the NFC controller 206, and which may be used to establish communication with the payment card 116. The payment card 116 is an example of an external transaction device of the kind set forth. An external transaction device may be a physical smart card or a so-called emulated card which is embedded in a mobile phone, for instance.

The NFC controller 206 is arranged to operate in the above-secure mode of operation. In particular, the NFC controller 206 is arranged to operate in a mode of operation in which it inhibits the host processor 202 from performing transactions with the payment card 116. More specifically, in the secure mode of operation, the NFC controller 206 may block select-application commands which are sent by the host processor 202 and which are directed to the payment card 116. That is to say, the payment card 116 may contain at least one card payment application 118 that must be selected prior to performing a payment transaction. Such a selection may be done by means of one or more select-application commands. For example, the card payment application 118 may be selected by means of a SELECT AID command sent either by the host processor 202 or the secure element 208, via the NFC controller 206, to the card 116. Note that the SELECT AID command is specified in the global EMV card payment standard (AID being an Application Identifier). Furthermore, prior to sending a SELECT AID command, a SELECT PPSE command may be sent either by the host processor 202 or the secure element 208, via the NFC controller 206, to the card 116 (PPSE being a Proximity Payment System Environment). The SELECT PPSE command, which may also be regarded as a select-application command of the kind set forth, returns a list of identifiers of card payment applications supported by the card 116. In the secure mode, the NFC controller 206 may block all select-application commands issued by the host processor 202, but not those sent by the secure element 208; consequently only the secure element 208 may be allowed to send select-application commands and therefore to perform a transaction with the card 116. In this way, the payment-related data contained in the card 116 are only exposed to the secure element 208. Thus, in the secure mode, the NFC controller 206 does not inhibit the secure element 208 to perform transactions with the card 116.

It is noted that the NFC controller 206 may detect that select-application commands are issued by the host processor 202 by sniffing the data sent by the host processor 202. If the NFC controller 206 detects a select-application command issued by the host processor 202, it may abort the communication with the card 116, for example, thereby effectively blocking said select-application command.

Furthermore, it is noted that, instead of the NFC controller 206, the consumer device 200 may contain a contact-interface controller (not shown), in which case the contact-interface controller may block all select-application commands issued by the host processor 202. In that case, a SELECT PSE command may be sent either by the host processor 202 or the secure element 208, via the contact-interface controller, to the card 116 (PSE being a Payment System Environment). The contact-interface controller may for example be an interface controller which conforms to standard ISO/IEC 7816.

In illustrative embodiments, the NFC controller 206 is further arranged to determine, in the secure mode of operation, whether a detected card 116 contains at least one card payment application 118. If the NFC controller 206 determines that the card 116 contains at least one card payment application 118, then it may inhibit the host processor 202 from performing transactions with the card, in particular by entering into a payment mode in which it blocks select-application commands sent by the host processor 202. If the NFC controller 206 determines that the card 116 does not contain a card payment application 118, then it may allow the host processor 202 to perform transactions with the card 116. In particular, if the NFC controller 206 determines that the card 116 does not contain a card payment application 118, it may not block select-application commands sent by the host processor 202. Thereby, disruptions of the host processor 202 may be minimized. At the same time, since the NFC controller 206 verifies autonomously whether the card 116 contains said payment application 118, the adequate security level may be achieved. Thus, in this embodiment, the NFC controller 206 blocks select-application commands sent by the host processor 206 only if it is operating in the payment mode and in the secure mode (since it may only enter into the payment mode if it is already in the secure mode).

For example, the NFC controller 206 may autonomously send select-application commands to the card 116, in order to detect the presence of a card payment application. For instance, the NFC controller 206 may send a SELECT PPSE command to the card 116, and if the card 116 returns at least one card payment application identifier, then the NFC controller 206 may conclude that the card 116 contains a card payment application 118 and enter in the payment mode of operation. Otherwise, it may remain in a normal mode of operation, i.e. a mode in which no select-application commands are blocked, until a new card is detected. Alternatively, but without limitation, the NFC controller 206 may send one or more SELECT AID commands to the card 116, and if a SELECT AID command succeeds, then the NFC controller 206 may conclude that the card 116 contains a card payment application 118 and enter in the payment mode of operation. In this case, the NFC controller 206 may generate the SELECT AID commands using a list of application identifiers that has been preprogrammed in the NFC controller 206, for example. Before determining whether the card 116 contains a card payment application the NFC controller 206 will have detected the card 116, i.e. detected its presence in the RF field, selected it for communication and performed an initialization process, such that select-application commands may be sent to the card 116 and processed by it.

In illustrative embodiments, the NFC controller 206 is further arranged to enter into the secure mode of operation only if a POS application 210 is active in the secure element 208, i.e. only if a POS application 210 has been installed in the secure element 208 and only if said POS application 210 has been activated, i.e. if it is in an active state. For example, the NFC controller 206 may check, when it is initialized, whether the POS application 210 is installed in the secure element 208 by searching for an identifier of said POS application 210. Additionally, if the POS application 210 is present, the NFC controller 206 may check whether the POS application 210 is in an active state. The NFC controller 206 may check whether the POS application 210 is installed and active by sniffing commands sent by the host processor 202 to the secure element 208. If the POS application 210 is in an active state, the NFC controller 206 may enter into the secure mode of operation. It is noted that, for the NFC controller 206 to enter into the secure mode of operation, it may not be necessary that a specific POS application is active. Instead, it may be sufficient that an arbitrary POS application is active. Furthermore, in illustrative embodiments the NFC controller 206 may be arranged to operate in the secure mode of operation until the POS application 210 is deactivated.

If the NFC controller 206 enables the secure mode of operation only when a POS application is active, the host processor 202 may still have enough time available for performing transactions with the card 116. Alternatively, but without limitation, the secure mode of operation may be activated permanently, which may further protect the payment-related data.

Furthermore, the NFC controller 206 may check, in the secure mode of operation, whether the POS application 210 has been selected by the host processor 202, in particular by the payment terminal application 204, before the secure element 208 performs a transaction with the card 116. In this case, the secure element 208 may be allowed to perform transactions with the card 116 only if the said POS application 210 has been selected by the host processor 202, which may further protect the payment-related data. The NFC controller 206 may perform the check by sniffing commands sent by the host processor 202 to the secure element 208, specifically by looking for an identifier of the POS application 210. In order to facilitate this process, POS application identifiers may contain a unique value.

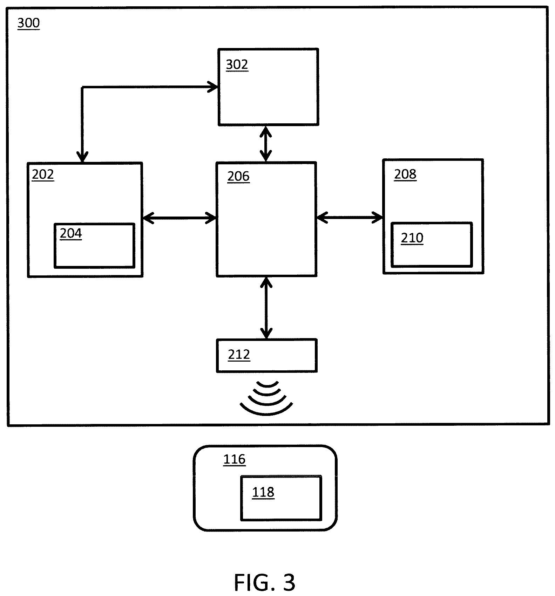

Fig. 3 shows a further illustrative embodiment of a consumer device 300. The consumer device 300 contains, in addition to the components of the consumer device shown in Fig. 2, a further secure element in the form of a removable Subscriber Identity Module (SIM) card 302. In accordance with the present disclosure, a host component may also be embodied as a further secure element of the consumer device 300. In that case, the NFC controller 206 may block select-application commands which are sent by said further secure element and which are directed to the payment card 116. Furthermore, the NFC controller 206 may block select-application commands which are sent by both host components, i.e. the host processor 202 and the SIM card 302. In case of a plurality of host components, the NFC controller 206 may block select-application commands which are sent by all host components.

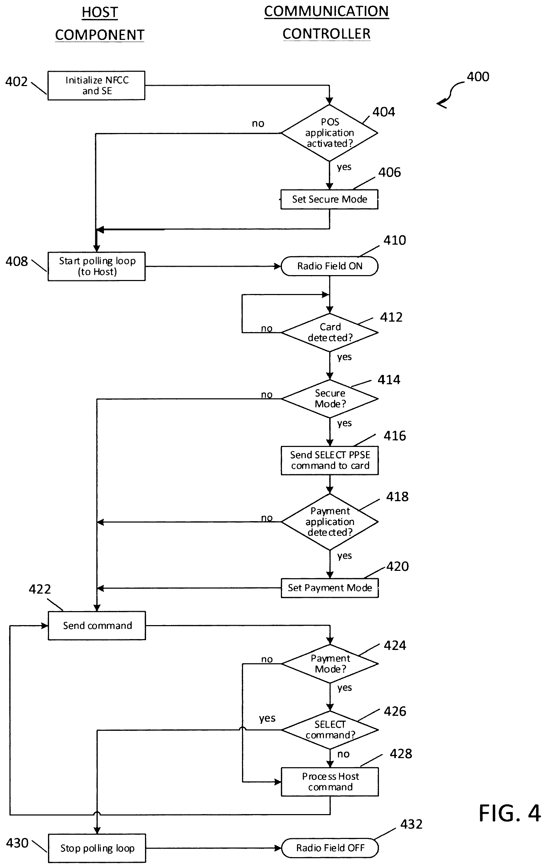

**Fig. 4** shows an example of a process 400 which may implement the presently disclosed method. In particular, it shows an example of a card detection process 400. The process 400 comprises the following steps. At 402, the NFC controller and secure element are initialized by the host component. Next, at 404, the NFC controller verifies whether the POS application has been activated. If so, the NFC controller sets the secure mode at 406. If not, the NFC controller remains in normal mode. Subsequently, the host component establishes a communication channel between the radio interface of the NFC controller and the host component and starts the polling loop on the NFC controller at 408. The polling loop comprises turning the radio field ON at 410 and waiting for a card to be detected at 412. Furthermore, if the NFC controller has detected a card, it checks, at 414, whether it is operating in the secure mode. If so, it proceeds to step 416, wherein it sends a SELECT PPSE command to the card in order to determine autonomously whether the card contains at least one card payment application. If the NFC controller detects that it is not operating in the secure mode, it returns control to the host component, which in turn sends a host command at 422. If the NFC controller determines, at 416, that the card contains a payment application, it enters into the payment mode at 420 and returns control to the host component. If it determines that the card does not contain a payment application, it returns control to the host component without entering into the payment mode. After receiving the host command, the NFC controller checks, at 424, whether it is operating in the payment mode. If so, it checks, at 426, whether the host command is a select-application command. If so, the polling loop is stopped, at 430, by the host component, and the radio field is turned OFF, at 432, by the NFC controller. If not, the host command may be sent to the card for further processing at 428. The same may be done if, at 424, the NFC controller determines that it is not operating in the payment mode.

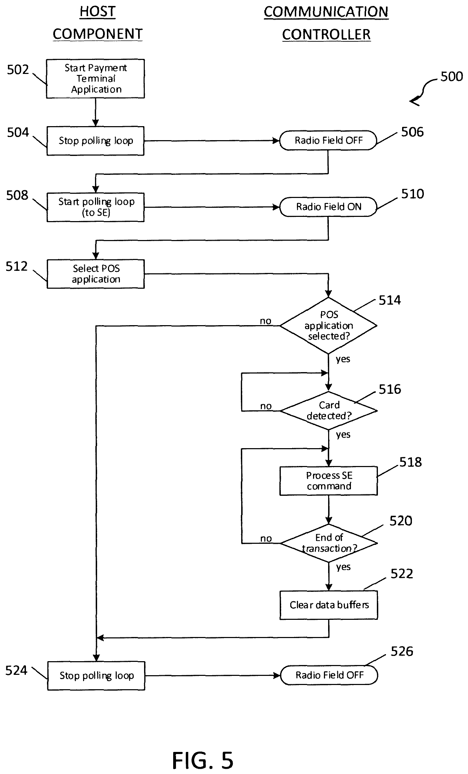

**Fig. 5** shows a further example of a process 500 which may implement the presently disclosed method. In particular, it shows an example of a payment transaction process 500. The process 500 comprises the following steps. At 502, the host component starts a payment terminal application. Next, at 504, the host component stops the polling loop, if previously started, at 504 and the NFC controller turns OFF the radio field at 506. Subsequently, since the secure element will perform the payment transaction, the host component establishes a communication channel between the radio interface of the NFC controller and the secure element and starts the polling loop on the NFC controller at 508. It consists in turning the radio field ON at 510. Next, the host component selects, at 512, the POS application that resides in the secure element. Subsequently, at 514, the NFC controller checks whether the POS application has indeed been selected by the host component. If so, the NFC controller waits for a card to be detected at 516. Furthermore, if the NFC controller has detected a card, it processes one or more commands originating from the secure element and directed to the card in step 518, which is repeated until the NFC controller detects, at 520, that the transaction has been ended by the secure element. If the transaction has ended, the NFC controller clears its data buffers at 522, and the host component stops the polling loop at 524. Finally, the NFC controller turns the radio field OFF at 526.

The systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: consumer device
- 102: host processor
- 104: payment terminal application
- 106: external point-of-sale device
- 108: secure controller
- 110: NFC controller
- 112: NFC antenna
- 114: point-of-sale application
- 116: payment card
- 118: card payment application
- 200: consumer device
- 202: host processor
- 204: payment terminal application
- 206: NFC controller
- 208: secure element
- 210: point-of-sale application
- 212: NFC antenna
- 300: consumer device
- 302: SIM card
- 400: card detection process
- 402: initialize NFCC and SE
- 404: POS application activated?
- 406: set secure mode
- 408: start polling loop (to host)
- 410: radio field ON
- 412: card detected?
- 414: secure mode?
- 416: send SELECT PPSE command to card
- 418: payment application detected?
- 420: set payment mode
- 422: send command
- 424: payment mode?
- 426: SELECT command?
- 428: process host command
- 430: stop polling loop
- 432: radio field OFF
- 500: payment transaction process
- 502: start payment terminal application
- 504: stop polling loop
- 506: radio field OFF
- 508: start polling loop (to SE)
- 510: radio field ON
- 512: select POS application
- 514: POS application selected?
- 516: card detected?
- 518: process SE command
- 520: end of transaction?
- 522: clear data buffers
- 524: stop polling loop
- 526: radio field OFF

### LIST OF ACRONYMS

- NFC: near field communication
- NFFC: NFC controller
- POS: point of sale
- PPSE: Proximity Payment System Environment
- PSE: Payment System Environment
- SE: secure element

## Claims

1. A device (200, 300) for facilitating a transaction, comprising at least one host component (202), a communication controller (206) and a secure element (208), said communication controller (206) being a near field communication, NFC, controller and being communicatively coupled to the host component (202) and to the secure element (208),
wherein said communication controller (206) is arranged to establish (412 (yes); 516 (yes)) a communication with an external transaction device (116),
wherein said communication controller (206) is further arranged to operate (414 (yes), 416, 418, 420, 424 (yes), 426; 518, 520, 522) in a secure mode of operation in which the communication controller (206) does not inhibit the secure element (208) to perform (424 (yes), 426, 428; 518, 520) transactions with said transaction device (116),
**characterized in that** said communication controller (206), in the secure mode of operation, is further arranged to inhibit the host component (202) from performing transactions with said transaction device (116).

2. A device (200, 300) as claimed in claim 1, wherein, in the secure mode of operation, the communication controller (206) is arranged to block select-application commands directed to the transaction device (116) and originating from the host component (202), thereby inhibiting the host component (202) from performing transactions with said transaction device (116).

3. A device (200, 300) as claimed in claim 2, wherein, in the secure mode of operation, the communication controller (206) is further arranged to determine (418) whether the transaction device (116) contains at least one payment application (118), to enter (420) into a payment mode if (418 (yes)) the transaction device (116) contains said payment application (118), and to block said select-application commands only if the communication controller (202) is operating (424 (yes), 426, 428; 514, 516 (yes), 518, 520) in the payment mode.

4. A device (200, 300) as claimed in any preceding claim, wherein the communication controller (206) is further arranged to enter (406) into the secure mode of operation only if a point-of-sale application (210) is active (404 (yes)) in the secure element (208).

5. A device (200, 300) as claimed in claim 4, wherein the communication controller (206) is further arranged to operate (410, 414, 416, 418, 420, 424, 426, 428) in the secure mode of operation until the point-of-sale application (210) is deactivated.

6. A device (200, 300) as claimed in claim 4 or 5, wherein the communication controller (206) is further arranged to verify (514), in the secure mode of operation, whether the point-of-sale application (210) has been selected by the host component (202) before the secure element (208) performs (518, 520) a transaction with the transaction device (116).

7. A device (200, 300) as claimed in any preceding claim, wherein the communication controller (206) is further arranged to operate permanently in the secure mode of operation.

8. A device (200, 300) as claimed in any preceding claim, wherein the communication controller (206) is a controller for controlling a wireless communication.

9. A device (200, 300) as claimed in claim 8, wherein the communication controller (206) is a near field communication controller.

10. A device (200, 300) as claimed in any one of claims 1 to 7, wherein the communication controller (206) is a contact-interface controller.

11. A device (200, 300) as claimed in any preceding claim, being a point-of-sale device.

12. A device (200, 300) as claimed in any preceding claim, being a consumer device.

13. A device (200, 300) as claimed in any preceding claim, being a personal computer, a mobile phone, a tablet, or a set-top box.

14. A method (400, 500) for facilitating a transaction using a device (200, 300), said device (200, 300) comprising at least one host component (202), a communication controller (206) and a secure element (208), said communication controller (206) being a near field communication, NFC, controller (206) and being communicatively coupled to the host component (202) and to the secure element (208), the method (400, 500) comprising:
said communication controller (206) establishes (412 (yes); 516 (yes)) a communication with an external transaction device (116),
said communication controller (206) operates (414 (yes), 416, 418, 420, 424 (yes), 426; 518, 520, 522) in a secure mode of operation in which the communication controller (206) does not inhibit the secure element (208) to perform (424 (yes), 426, 428; 518, 520) transactions with said transaction device (116),
**characterized in that** said communication controller (206), when operating in the secure mode of operation, inhibits the host component (202) from performing transactions with said transaction device (116).

15. A computer program product comprising instructions which, when being executed by processing unit, cause said processing unit to carry out a method as claimed in claim 14.

## Patentansprüche

1. Eine Vorrichtung (200, 300) zum Ermöglichen einer Transaktion, die Vorrichtung aufweisend mindestens eine Hostkomponente (202), eine Kommunikationssteuerung (206) und ein sicheres Element (208), wobei die Kommunikationssteuerung (206) eine Nahfeldkommunikation, NFC, Steuerung ist und mit der Hostkomponente (202) und mit dem sicheren Element (208) kommunikativ gekoppelt ist,
wobei die Kommunikationssteuerung (206) eingerichtet ist, eine Kommunikation mit einer externen Transaktionsvorrichtung (116) herzustellen (412 (ja); 516 (ja)),
wobei die Kommunikationssteuerung (206) ferner eingerichtet ist, in einem sicheren Betriebsmodus zu arbeiten (414 (ja), 416, 418, 420, 424 (ja), 426; 518, 520, 522), in welchem die Kommunikationssteuerung (206) das sichere Element (208) nicht daran hindert, Transaktionen mit der Transaktionsvorrichtung (116) durchzuführen (424 (ja), 426, 428; 518, 520),
**dadurch gekennzeichnet, dass** die Kommunikationssteuerung (206) in dem sicheren Betriebsmodus ferner eingerichtet ist, die Hostkomponente (202) daran zu hindern, Transaktionen mit der Transaktionsvorrichtung (116) durchzuführen.

2. Eine Vorrichtung (200, 300) gemäß Anspruch 1, wobei die Kommunikationssteuerung (206) in dem sicheren Betriebsmodus eingerichtet ist, Anwendungsauswahl Befehle zu blockieren, die an die Transaktionsvorrichtung (116) gerichtet sind und von der Hostkomponente (202) stammen, wodurch die Hostkomponente (202) daran gehindert wird, Transaktionen mit der Transaktionsvorrichtung (116) durchzuführen.

3. Eine Vorrichtung (200, 300) gemäß Anspruch 2, wobei die Kommunikationssteuerung (206) in dem sicheren Betriebsmodus ferner eingerichtet ist, zu bestimmen (418), ob die Transaktionsvorrichtung (116) mindestens eine Zahlungsanwendung (118) enthält, in einen Zahlungsmodus einzutreten (420), wenn (418 (ja)) die Transaktionsvorrichtung (116) die Zahlungsanwendung (118) enthält, und die Anwendungsauswahl Befehle nur zu blockieren, wenn die Kommunikationssteuerung (202) in dem Zahlungsmodus arbeitet (424 (ja), 426, 428; 514, 516 (ja), 518, 520).

4. Eine Vorrichtung (200, 300) gemäß einem vorhergehenden Anspruch, wobei die Kommunikationssteuerung (206) ferner eingerichtet ist, in den sicheren Betriebsmodus nur einzutreten (406), wenn eine Verkaufsort Anwendung (210) in dem sicheren Element (208) aktiv ist (404 (ja)).

5. Eine Vorrichtung (200, 300) gemäß Anspruch 4, wobei die Kommunikationssteuerung (206) ferner eingerichtet ist, in dem sicheren Betriebsmodus zu arbeiten (410, 414, 416, 418, 420, 424, 426, 428), bis die Verkaufsort Anwendung (210) deaktiviert wird.

6. Eine Vorrichtung (200, 300) gemäß Anspruch 4 oder 5, wobei die Kommunikationssteuerung (206) ferner eingerichtet ist, in dem sicheren Betriebsmodus zu verifizieren (514), ob die Verkaufsort Anwendung (210) von der Hostkomponente (202) ausgewählt wurde, bevor das sichere Element (208) eine Transaktion mit der Transaktionsvorrichtung (116) durchführt (518, 520).

7. Eine Vorrichtung (200, 300) gemäß einem vorhergehenden Anspruch, wobei die Kommunikationssteuerung (206) ferner eingerichtet ist, dauerhaft in dem sicheren Betriebsmodus zu arbeiten.

8. Eine Vorrichtung (200, 300) gemäß einem vorhergehenden Anspruch, wobei die Kommunikationssteuerung (206) eine Steuerung zum Steuern einer drahtlosen Kommunikation ist.

9. Eine Vorrichtung (200, 300) gemäß Anspruch 8, wobei die Kommunikationssteuerung (206) eine Nahfeldkommunikation Steuerung ist.

10. Eine Vorrichtung (200, 300) gemäß einem der Ansprüche 1 bis 7, wobei die Kommunikationssteuerung (206) eine Kontaktschnittstelle Steuerung ist.

11. Eine Vorrichtung (200, 300) gemäß einem vorhergehenden Anspruch, welche eine Verkaufsort Vorrichtung ist.

12. Eine Vorrichtung (200, 300) gemäß einem vorhergehenden Anspruch, welche eine Verbrauchervorrichtung ist.

13. Eine Vorrichtung (200, 300) gemäß einem vorhergehenden Anspruch, welche ein Personal Computer, ein Mobiltelefon, ein Tablet oder eine Set-Top-Box ist.

14. Ein Verfahren (400, 500) zum Ermöglichen einer Transaktion unter Verwendung einer Vorrichtung (200, 300), die Vorrichtung (200, 300) aufweisend mindestens eine Hostkomponente (202), eine Kommunikationssteuerung (206) und ein sicheres Element (208), wobei die Kommunikationssteuerung (206) eine Nahfeldkommunikation, NFC, Steuerung (206) ist und mit der Hostkomponente (202) und mit dem sicheren Element (208) kommunikativ gekoppelt ist, das Verfahren (400, 500) aufweisend:
die Kommunikationssteuerung (206) stellt her (412 (ja); 516 (ja)) eine Kommunikation mit einer externen Transaktionsvorrichtung (116),
die Kommunikationssteuerung (206) arbeitet (414 (ja), 416, 418, 420, 424 (ja), 426; 518, 520, 522) in einem sicheren Betriebsmodus, in welchem die Kommunikationssteuerung (206) das sichere Element (208) nicht daran hindert, Transaktionen mit der Transaktionsvorrichtung (116) durchzuführen (424 (ja), 426, 428; 518, 520),
**dadurch gekennzeichnet, dass** die Kommunikationssteuerung (206), wenn sie in dem sicheren Betriebsmodus arbeitet, die Hostkomponente (202) daran hindert, Transaktionen mit der Transaktionsvorrichtung (116) durchzuführen.

15. Ein Computerprogrammprodukt, aufweisend Anweisungen, die, wenn sie von einer Verarbeitungseinheit ausgeführt werden, bewirken, dass die Verarbeitungseinheit ein Verfahren durchführt, wie es in Anspruch 14 beansprucht wird.

## Revendications

1. Dispositif (200, 300) pour faciliter une transaction, comprenant au moins un composant hôte (202), un contrôleur de communication (206) et un élément sécurisé (208), ledit contrôleur de communication (206) étant un contrôleur de communication en champ proche, NFC, et étant couplé en communication avec le composant hôte (202) et l'élément sécurisé (208),
où ledit contrôleur de communication (206) est agencé pour établir (412 (oui) ; 516 (oui)) une communication avec un dispositif de transaction externe (116),
où ledit contrôleur de communication (206) est en outre agencé pour faire fonctionner (414 (oui), 416, 418, 420, 424 (oui), 426 ; 518, 520, 522), dans un mode de fonctionnement sécurisé dans lequel le contrôleur de communication (206) n'empêche pas l'élément sécurisé (208) d'effectuer (424 (oui), 426, 428 ; 518, 520) des transactions avec ledit dispositif de transaction (116),
**caractérisé en ce que** ledit contrôleur de communication (206), dans le mode de fonctionnement sécurisé, est en outre agencé pour empêcher le composant hôte (202) d'effectuer des transactions avec ledit dispositif de transaction (116).

2. Dispositif (200, 300) tel que revendiqué dans la revendication 1, dans lequel, dans le mode de fonctionnement sécurisé, le contrôleur de communication (206) est agencé pour bloquer des commandes de sélection d'application dirigées vers le dispositif de transaction (116) et provenant du composant hôte (202), empêchant ainsi le composant hôte (202) d'exécuter des transactions avec ledit dispositif de transaction (116) .

3. Dispositif (200, 300) tel que revendiqué dans la revendication 2, dans lequel, dans le mode de fonctionnement sécurisé, le contrôleur de communication (206) est en outre agencé pour déterminer (418) si le dispositif de transaction (116) contient au moins une application de paiement (118), pour passer (420) dans un mode de paiement si (418 (oui)) le dispositif de transaction (116) contient ladite application de paiement (118), et pour bloquer lesdites commandes de sélection d'application seulement si le contrôleur de communication (202) fonctionne (424 (oui), 426, 428 ; 514, 516 (oui), 518, 520) dans le mode paiement.

4. Dispositif (200, 300) tel que revendiqué dans l'une quelconque des revendications précédentes, dans lequel le contrôleur de communication (206) est en outre agencé pour passer (406) dans le mode de fonctionnement sécurisé uniquement si une application de point de vente (210) est active (404 (oui)) dans l'élément sécurisé (208).

5. Dispositif (200, 300) tel que revendiqué dans la revendication 4, dans lequel le contrôleur de communication (206) est en outre agencé pour fonctionner (410, 414, 416, 418, 420, 424, 426, 428) dans le mode de fonctionnement sécurisé jusqu'à ce que l'application de point de vente (210) soit désactivée.

6. Dispositif (200, 300) tel que revendiqué dans la revendication 4 ou la revendication 5, dans lequel le contrôleur de communication (206) est en outre agencé pour vérifier (514), dans le mode de fonctionnement sécurisé, si l'application de point de vente (210) a été sélectionnée par le composant hôte (202) avant que l'élément sécurisé (208) n'exécute (518, 520) une transaction avec le dispositif de transaction (116).

7. Dispositif (200, 300) tel que revendiqué dans l'une quelconque des revendications précédentes, dans lequel le contrôleur de communication (206) est en outre agencé pour fonctionner en permanence dans le mode de fonctionnement sécurisé.

8. Dispositif (200, 300) tel que revendiqué dans l'une quelconque des revendications précédentes, dans lequel le contrôleur de communication (206) est un contrôleur pour contrôler une communication sans fil.

9. Dispositif (200, 300) tel que revendiqué dans la revendication 8, dans lequel le contrôleur de communication (206) est un contrôleur de communication en champ proche.

10. Dispositif (200, 300) tel que revendiqué dans l'une quelconque des revendications 1 à 7, dans lequel le contrôleur de communication (206) est un contrôleur à interface à contact.

11. Dispositif (200, 300) tel que revendiqué dans l'une quelconque des revendications précédentes, le dispositif étant un dispositif de point de vente.

12. Dispositif (200, 300) tel que revendiqué dans l'une quelconque des revendications précédentes, le dispositif étant un dispositif grand public.

13. Dispositif (200, 300) tel que revendiqué dans l'une quelconque des revendications précédentes, le dispositif étant un ordinateur personnel, un téléphone mobile, une tablette ou un boîtier décodeur.

14. Procédé (400, 500) pour faciliter une transaction utilisant un dispositif (200, 300), ledit dispositif (200, 300) comprenant au moins un composant hôte (202), un contrôleur de communication (206) et un élément sécurisé (208), ledit contrôleur de communication (206) étant un contrôleur de communication en champ proche, NFC, (206) et étant couplé en communication avec le composant hôte (202) et l'élément sécurisé (208), le procédé (400, 500) comprenant les étapes suivantes :
ledit contrôleur de communication (206) établit (412 (oui) ; 516 (oui)) une communication avec un dispositif de transaction externe (116),
ledit contrôleur de communication (206) fonctionne (414 (oui), 416, 418, 420, 424 (oui), 426 ; 518, 520, 522) dans un mode de fonctionnement sécurisé, dans lequel le contrôleur de communication (206) n'empêche pas l'élément de sécurité (208) d'effectuer (424 (oui), 426, 428 ; 518, 520) des transactions avec ledit dispositif de transaction (116),
**caractérisé en ce que** ledit contrôleur de communication (206), lorsqu'il fonctionne dans le mode de fonctionnement sécurisé, empêche le composant hôte (202) d'effectuer des transactions avec ledit dispositif de transaction (116).

15. Produit programme informatique comprenant des instructions qui, lorsqu'elles sont exécutées par une unité de traitement, amènent ladite unité de traitement à exécuter un procédé tel que revendiqué dans la revendication 14.
